# EUROPEAN PATENT APPLICATION

(11) **EP 4 300 930 A1**
(43) Date of publication of application: **03.01.2024**
(21) Application number: 22205312.6
(22) Date of filing: 03.11.2022
(51) Int. Cl.: H04M 1/72469, H04M 1/72484, H04W 4/16, H04W 88/06

(54) **METHOD FOR CALL, DEVICE AND STORAGE MEDIUM**

(30) Priority: 28.06.2022 CN 202210741592
(71) Applicant: Beijing Xiaomi Mobile Software Co., Ltd., Beijing 100085 (CN)
(72) Inventor: XI, Chunyan, Beijing, 100085 (CN)
(74) Representative: dompatent von Kreisler Selting Werner - Partnerschaft von Patent- und Rechtsanwälten mbB

(57) **Abstract**

This present disclosure relates to a method for a call, device and storage medium, relating to the technical field of intelligent terminals. The method includes: determining (S11, S21) a call request, used to trigger a concurrent call based on a first SIM card and a second SIM card; performing (S12) a call processing for the first SIM card and the second SIM card based on the call request.

## Description

### TECHNICAL FIELD

The present disclosure relates to the field of intelligent terminals, in particular to a method for a call, a device and a storage medium.

### BACKGROUND

The 5th generation mobile networks (5G) are the latest generation of cellular mobile communication technology and an extension of 4G (LTE-A, WiMax), 3G (UMTS, LTE) and 2G (GSM) systems. The performance goal of 5G is to achieve high data rate, reduce latency, save energy, reduce costs, improve system capacity and achieve large-scale equipment connection. With regard to the current situation of 5G construction, the domestic and international 5G networks are under accelerated construction, with 80% of the current 5G network construction. The goal is to build 300 thousand of 5G base stations, with 5G networks covering cities at prefecture level and above nationwide.

### SUMMARY

In order to overcome the problems in related art, the present disclosure provides a method for a call (also referred to as a calling method or a method for conducting a call), a device and a storage medium.

According to the first aspect of the present invention, there is provided a method for a call, applied to a terminal, where the terminal is installed with more than one SIM card, the more than one SIM card at least includes a first SIM card and a second SIM card, and the method includes: determining a call request, where the call request is used to trigger a concurrent call based on the first SIM card and the second SIM card; and performing a call processing (also referred to as a calling process or a call process) for the first SIM card and the second SIM card based on the call request.

Optionally, after the performing the call processing for the first SIM card and the second SIM card based on the call request, the method further includes: displaying a first call information and a second call information on a call interface; where the first call information at least includes attribute information of the first SIM card and a first call state of a call based on the first SIM card; the second call information at least includes attribute information of the second SIM card and a second call state of a call based on the second SIM card.

Optionally, the performing the call processing for the first SIM card and the second SIM card based on the call request includes: determining, in response to determining that the call request is triggered, a current call state of the first SIM card and/or the second SIM card already in progress; and controlling the first SIM card and/or the second SIM card to enter at least one of an in-call state, a call holding state and a call waiting state, based on the current call state of the first SIM card and/or the second SIM card already in progress.

Optionally, the current call state of the first SIM card already in progress is the in-call state, the call request includes a first call request detected when the first SIM card is in the in-call state, and the first call request is used to trigger a call of the first SIM card and/or the second SIM card; the controlling the first SIM card and/or the second SIM card to enter at least one of the in-call state, the call holding state and the call waiting state, based on the current call state of the first SIM card and/or the second SIM card already in progress includes: maintaining the current call state of the first SIM card already in progress as the in-call state, and configuring the call of the call of the first SIM card and/or the second SIM card triggered by the first call request as in the call holding state; or maintaining the current call state of the first SIM card already in progress as the in-call state, and configuring the call of the second SIM card triggered by the first call request as in the in-call state; or configuring the call of the first SIM card and/or the second SIM card triggered by the first call request as in the in-call state, and switching the current call state of the first SIM card already in progress from the in-call state to the call holding state.

Optionally, the call request further includes a second call request, the second call request is used to trigger a call of the first SIM card and/or the second SIM card, and the method further includes: configuring the call of the first SIM card and/or the second SIM card triggered by the second call request as in the call waiting state.

Optionally, the method further includes: switching the current call state of the first SIM card and/or the second SIM card already in progress from the in-call state to the call holding state, in response to determining that the call of the first SIM card and/or the second SIM card triggered by the second call request is switched from the call waiting state to the in-call state and the current call state of the first SIM card and/or the second SIM card already in progress is the in-call state; and maintaining the current call state of the first SIM card and/or the second SIM card already in progress as the call holding state, or disconnecting a call of the first SIM card and/or the second SIM card in the call holding state, in response to determining that the call of the first SIM card and/or the second SIM card triggered by the second call request is switched from the call waiting state to the in-call state and the current call state of the first SIM card and/or the second SIM card already in progress is the call holding state.

Optionally, the method further includes: displaying a merging tab in response to determining that the first call request and the second call request are call requests triggered by a same SIM card, where the merging tab is used to merge the first call request and the second call request; and merging the first call request and the second call request in response to determining that the merging tab is triggered.

Optionally, the method further includes: displaying an adding tab in response to determining that the first call request and the second call request are call requests triggered by different SIM cards, where the adding tab is used to add a new call; and adding the new call in response to determining that the adding tab is triggered.

According to the second aspect of the embodiments of the present invention, there is provided a device for conducting a call, applied to a terminal, where the terminal is installed with more than one SIM card, the more than one SIM card at least includes a first SIM card and a second SIM card, and the device includes: a determination module, configured to determine a call request, where the call request is used to trigger a concurrent call based on the first SIM card and the second SIM card; and a processing module, configured to perform a call processing for the first SIM card and the second SIM card based on the call request.

Optionally, the processing module is further configured to: display a first call information and a second call information on a call interface; where the first call information at least includes attribute information of the first SIM card and a first call state of a call based on the first SIM card; and the second call information at least includes attribute information of the second SIM card and a second call state of a call based on the second SIM card.

Optionally, the processing module is further configured to: determine, in response to determining that the call request is triggered, a current call state of the first SIM card and/or the second SIM card already in progress; and control the first SIM card and/or the second SIM card to enter at least one of an in-call state, a call holding state and a call waiting state, based on the current call state of the first SIM card and/or the second SIM card already in progress.

Optionally, the current call state of the first SIM card already in progress is the in-call state, the call request includes a first call request detected when the first SIM card is in the in-call state, and the first call request is used to trigger a call of the first SIM card and/or the second SIM card; the processing module is further configured to maintain the current call state of the first SIM card already in progress as the in-call state, and configure a call of the first SIM card and/or the second SIM card triggered by the first call request as in the call holding state; or maintain the current call state of the first SIM card already in progress as the in-call state, and configure the call of the second SIM card triggered by the first call request as in the in-call state; or configure the call of the first SIM card and/or the second SIM card triggered by the first call request as in the in-call state, and switch the current call state of the first SIM card already in progress from the in-call state to the call holding state.

Optionally, the call request further includes a second call request, the second call request is used to trigger a call of the first SIM card and/or the second SIM card; the processing module is further configured to configure the call of the first SIM card and/or the second SIM card triggered by the second call request as in the call waiting state.

Optionally, the processing module is further configured to switch the current call state of the first SIM card and/or the second SIM card already in progress from the in-call state to the call holding state, in response to determining that the call of the first SIM card and/or the second SIM card triggered by the second call request is switched from the call waiting state to the in-call state and the current call state of the first SIM card and/or the second SIM card already in progress is the in-call state; and maintain the current call state of the first SIM card and/or the second SIM card already in progress as the call holding state, or disconnect a call of the first SIM card and/or the second SIM card in the call holding state, in response to determining that the call of the first SIM card and/or the second SIM card triggered by the second call request is switched from the call waiting state to the in-call state and the current call state of the first SIM card and/or the second SIM card already in progress is the call holding state.

Optionally, the processing module is further configured to display a merging tab in response to determining that the first call request and the second call request are call requests triggered by a same SIM card, where the merging tab is used to merge the first call request and the second call request; and merge the first call request and the second call request in response to determining that the merging tab is triggered.

Optionally, the processing module is further configured to display an adding tab in response to determining that the first call request and the second call request are call requests triggered by different SIM cards, where the adding tab is used to add a new call; and add the new call in response to determining that the adding tab is triggered.

According to the third aspect of the present invention, there is provided a device for a call comprising: a processor; and a memory used to store an instruction executable by the processor; where, the processor is configured to execute the method for a call in the first aspect and any one of the embodiments.

According to the fourth aspect of the present invention, there is provided a non-transitory computer-readable storage medium, when an instruction in the storage medium is executed by a processor of a terminal, the terminal is enabled to execute the method for a call in the first aspect and any one of the embodiments.

The technical solutions provided by the embodiments of the present invention can include the following beneficial effects: in response to determining the call request triggered concurrently based on the first SIM card and the second SIM card, a call processing is performed on the first SIM card and the second SIM card based on the call request. Since the call request is triggered concurrently by the first SIM card and the second SIM card, compared with the related technology, in which only one call request can be triggered by the first SIM card and the second SIM card, it can be realized that more than one call request is processed at the same time in the present disclosure.

It should be understood that, the above general description and the following detailed description are illustrative and explanatory, and do not limit the disclosure.

### BRIEF DESCRIPTION OF THE DRAWINGS

The drawings here are incorporated into the description and form a part of the description, showing embodiments consistent with the present disclosure, and are used together with the description to explain the principles of the present disclosure.
FIG. 1 is a framework schematic diagram of a communication model.
FIG. 2 is a schematic diagram of a DSDA architecture shown according to an example of the present disclosure.
FIG. 3 is a flowchart of a method for a call shown according to an example of the present disclosure.
FIG. 4 is an interface schematic diagram of a call interface shown according to an example of the present disclosure.
FIG. 5 is a flowchart of a method for a call shown according to another example of the present disclosure.
FIG. 6 is a flowchart of a method for a call shown according to another example of the present disclosure.
FIG. 7 is an interface schematic diagram of a call interface shown according to another example of the present disclosure.
FIG. 8 is a flowchart of a method for a call shown according to another example of the present disclosure.
FIG. 9 is an interface schematic diagram of a call interface shown according to another example of the present disclosure.
FIG. 10 is a system flowchart for controlling the DSDA mode shown according to an example of the present disclosure.
FIG. 11 is a system process flowchart of a method for a call shown according to an example of the present disclosure.
FIG. 12 is a block diagram of a device for a call shown according to an example of the present disclosure.
FIG. 13 is a block diagram of a device for a call shown according to an example of the present disclosure.

### DETAILED DESCRIPTION

Example embodiments will be described in detail here, and their examples are shown in the drawings. When the following description refers to the drawings, unless otherwise indicated, the same number in different drawings indicates the same or similar elements. The embodiments described in the following example embodiments do not represent all embodiments consistent with the present disclosure.

At present most terminals currently support 5G, but most of which support Dual Sim Dual Standby (DSDS) technology. Although there are models supporting Dual Sim Dual Active (DSDA) on the market, there is no model that supports dual 5G voice service (VoNR) at the same time. Generally, they support 5G+4G and 4G+4G voice calls, and do not support 5G+5G voice calls, and concurrent calls of two cards cannot be really realized. When the primary card is in a call and the secondary card initiates a call, it will be prompted to connect the secondary card and hang up the primary card. That is, when the two cards are really cooperating, real concurrency cannot be achieved.

Based on the above problems, the embodiment of the present disclosure proposes a method for a call, which can perform processing on a plurality call requests at the same time, and enable two cards under the DADA to be in a call at the same time, thus realizing one terminal with the ability of two terminals.

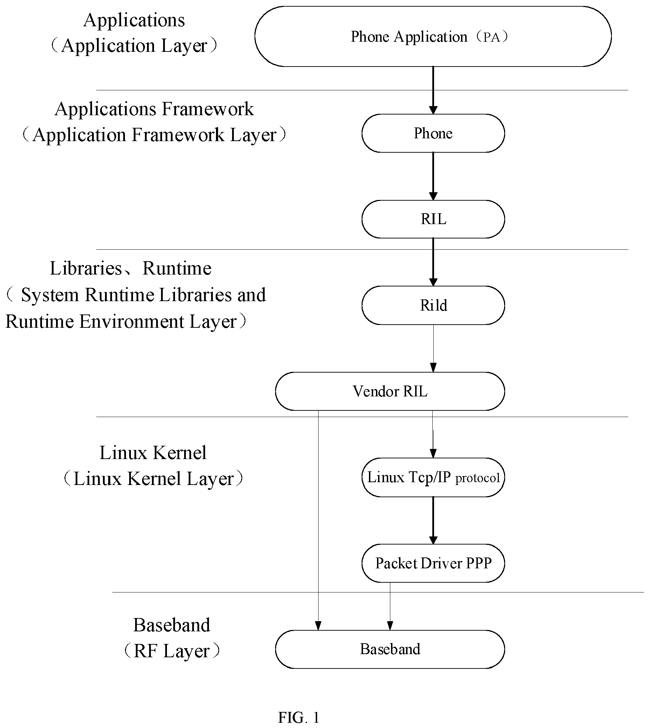

The method for a call according to the embodiments of the present disclosure is implemented based on the terminal communication framework model. FIG. 1 is a framework schematic diagram of a communication model in the related art.

As shown in FIG. 1, Applications (App Application Layer) mainly include the typical applications in various scenarios, such as Phone Application, SMS application, address book, etc. The Application Framework layer is the application framework layer of the terminal system, which mainly obtains the Modem signal parameters reported by the bottom layer, the network state and other basic communication messages, the selection of various network links, the control of various scenarios, and the transmission of data packets, as well as the storage and query of card information, such as the storage database in a mobile phone card. Among them, the RIL module is mainly used to communicate with the lower layer Rild, and the Phone module directly exposes a telephone function interface to application development users for them to call to realize the telephone function. The Libraries and Runtime layers are the system runtime libraries and the runtime environment layer, which are mainly responsible for the device startup, routing parameters and firewall settings, and sending data packets to the Linux and Runtime layers. The Rild module is responsible for the communication between the socket and the application framework, the Vendor RIL module is responsible for the downward communication with the Linux Kernel layer and the Baseband layer, and the Linux Kernel layer is mainly responsible for the device drive, the processing Modem of the Linux Tcp/IP protocol, and the primary part of the communication protocol processing. The data packet is sent to the Baseband layer after processed by PDCP/RLC/MAC. The Baseband layer (RF layer) is a functional module for receiving, transmitting and processing high-frequency radio waves, which includes two parts: RF receiving and RF transmitting. Finally, the data packets are sent to the base station.

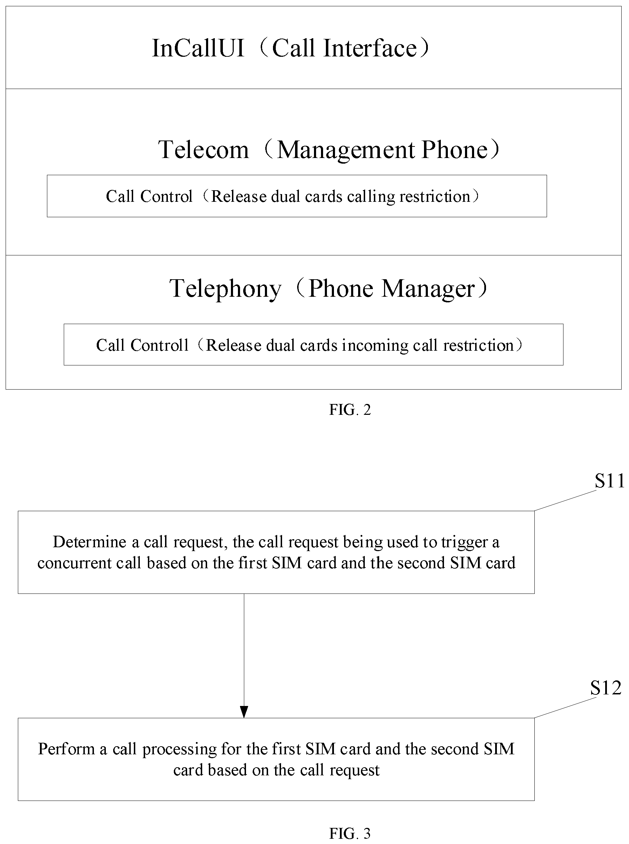

In the embodiments of the present disclosure, the application layer and the framework layer are modified based on the framework of the above communication model, as shown in FIG. 2, which shows the schematic diagram of the DSDA architecture applicable to the embodiments of the present disclosure.

Among them, Telephony (Phone Manager) belongs to the content of the phone module in the Application Framework. Telecom (Management Phone) and IncallUI (Call Interface) belong to the content of the Phone Application module in Application. Telecom is a terminal system service, which is mainly used to manage the current calls of the terminal system, such as functions of caller ID, answering the phone, hanging up the phone etc. It acts as a bridge between the Telephony module and the upper layer IncallUI. For example, when Telephony receives a new call, it will first notify Telecom, and then the Telecom service will notify the upper layer application of the call information, and the call interface will be displayed.

Telephony and Telecom will release the dual cards calling and incoming call restriction logic, allow the dual cards to call and receive calls concurrently, and improve the underlying processing failure of dual card phone concurrent processing to ensure that the modem side can have enough time to process the control logic on the APP side, and support two cards to call at the same time. When both calls are displayed, users can choose which call to answer, that is, to achieve dual card dual call.

FIG. 3 is a flowchart of a method for a call shown according to an embodiment. As shown in FIG. 3, the method for a call is applied in a terminal. More than one SIM card is installed in the terminal, and the more than one SIM card at least includes a first SIM card and a second SIM card. The method includes the following steps.

In step S11, a call request is determined, and the call request is used to trigger a concurrent call based on the first SIM card and the second SIM card.

Among them, the call request can include more than one call request.

In some embodiments of the present disclosure, the maximum number of the call requests that trigger the concurrent call based on the first SIM card and the second SIM card is 6. Among them, there may be three call requests that trigger the call based on the first SIM card and three call requests that trigger the call based on the second SIM card respectively.

Optionally, the call request used to trigger the concurrent call of the first SIM card and the second SIM card can be the call request actively triggered by the first SIM card and the second SIM card, that is, the call request actively dialed by the user through the first SIM card and the second SIM card. Or, the call request used to trigger the concurrent call of the first SIM card and the second SIM card can be the call request passively triggered by the first SIM card and the second SIM card, that is, the call request that the user receives from other users through the first SIM card and the second SIM card.

In some embodiments, the call request used to trigger the concurrent call of the first SIM card and the second SIM card can further include both the call request actively triggered by the first SIM card and the second SIM card and the call request passively triggered by the first SIM card and the second SIM card.

In step S12, a call processing is performed for the first SIM card and the second SIM card based on the call request.

After determining the more than one call request triggered concurrently based on the first SIM card and the second SIM card, call processing is performed for the more than one call request according to the user's requirements. However, it is worth noting that each SIM card at most supports one call in an in-call state, one call in a call holding state, and one call in a call waiting state. That is to say, there may be at most two calls in the in-call state, two calls in the call holding state, and two calls in the call waiting state in the terminal in the embodiments of the present disclosure. The call requests of the first SIM card and the second SIM card may be processed according to the user's actual demand.

Among them, the in-call state indicates that both parties are in call, the call holding state indicates that the call is suspended but not ended, and the call waiting state indicates that the user is calling but not connected.

In some embodiments of the present disclosure, by determining the call request triggered concurrently based on the first SIM card and the second SIM card, and performing a call processing on the first SIM card and the second SIM card based on the call request, since the call request is triggered concurrently by the first SIM card and the second SIM card, compared with that one call request can be triggered by the first SIM card and the second SIM card in the related technology, the present disclosure can realize the processing of more than one call request at the same time.

In some embodiments, a first call information and a second call information are displayed on a call interface.

Among them, the first call information includes at least attribute information of the first SIM card and a first call state of the call based on the first SIM card, and the second call information includes at least attribute information of the second SIM card and the second call state of the call based on the second SIM card.

Optionally, the attribute information of the SIM card can include the attributes such as the primary and secondary card attribute of the SIM card, and the call time of the SIM card etc. The call state can include the in-call state, the call holding state, and the call waiting state.

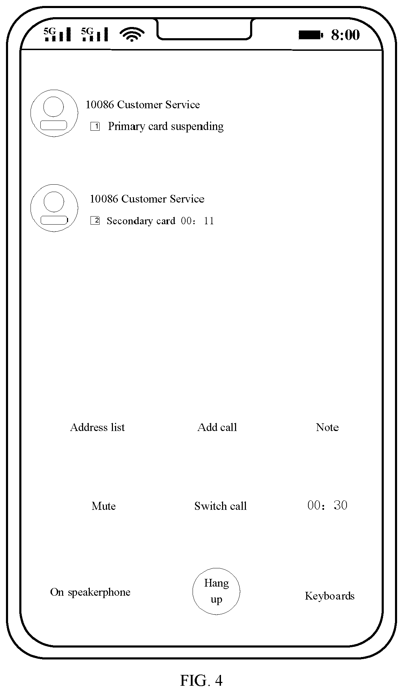

As an example, when the attribute information of the first SIM card is the primary card, the first call state is the in-call state, the attribute information of the second SIM card is the secondary card, and the second call state is the call holding state, the call interface can be as shown in FIG. 4. Among them, the user can switch the call state of each call in the call interface through the "Switching Call" option, and the "00:30" option represents the time from receiving the first call in the terminal.

In the embodiments of the present disclosure, by displaying the attribute information of the SIM card and the call state of the call request triggered based on each SIM card in the call interface, the user can clearly know which SIM card the terminal's current call is based on and the call state of the terminal's current call.

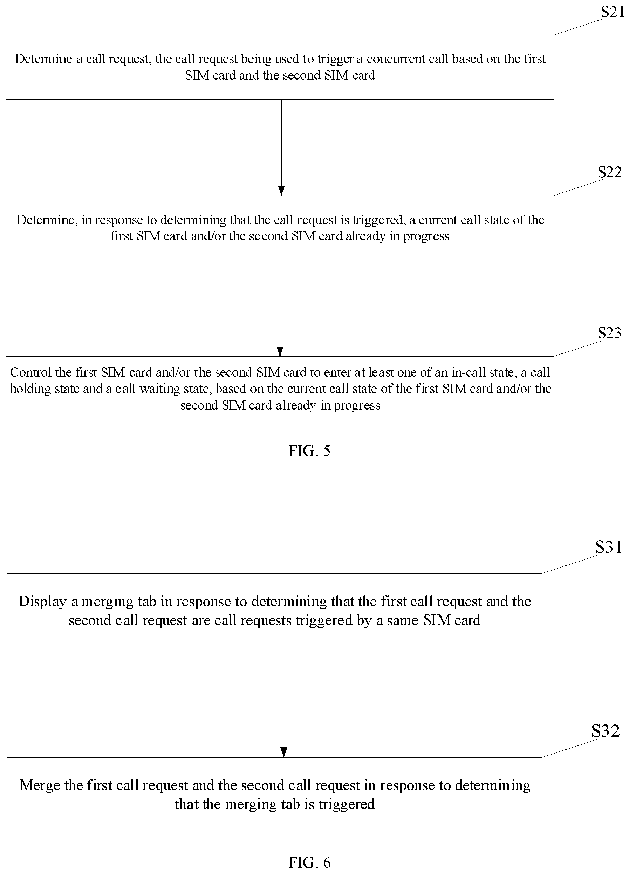

FIG. 5 is a flowchart of a method for a call shown according to another embodiment. As shown in FIG. 5, the method for a call is applied in the terminal, and includes the following steps.

In step S21, a call request is determined, and the call request is used to trigger a concurrent call based on the first SIM card and the second SIM card.

In step S22, in response to determining that the call request is triggered, a current call state of the first SIM card and/or the second SIM card already in progress is determined.

It should be understood that the current call of the first SIM card and the second SIM card is not triggered based on the call request in step S21, but is a call already in progress in the first SIM card and/or the second SIM card before step S21.

In step S23, based on the current call state of the first SIM card and/or the second SIM card already in progress, the first SIM card and/or the second SIM card is controlled to enter at least one of the in-call state, the call holding state and the call waiting state.

In some embodiments, if the current call state of the first SIM card already in progress is the in-call state, the call request includes a first call request detected when the first SIM card is the in-call state, and the first call request is used to trigger a call of the first SIM card and/or the second SIM card.

In an embodiment, the current call state of the first SIM card already in progress is maintained as the in-call state, and the call of the first SIM card and/or the second SIM card triggered by the first call request is configured as in the-call holding state.

In some embodiments, when the first call request is triggered based on the first SIM card, the current call state of the first SIM card already in progress is maintained as the in-call state, and the call of the first SIM card triggered by the first call request is configured as in the call holding state. That is, there are two calls based on the first SIM card in the terminal, one is in the in-call state, and the other is in the call holding state.

Or, when the first call request is triggered based on the second SIM card, the current call state of the first SIM card already in progress is maintained as the in-call state, and the call of the second SIM card triggered by the first call request is configured as in the call holding state. That is, there is one call based on the first SIM card and one call based on the second SIM card in the terminal, the call based on the first SIM card is in the in-call state, and the call based on the second SIM card is in the call holding state.

Or, when the first call request is triggered based on the first SIM card and the second SIM card at the same time, the current call state of the first SIM card already in progress is maintained as the in-call state, and the call of the first SIM card and the second SIM card triggered by the first call request is configured as in the call-holding state. That is, there are two calls based on the first SIM card and one call based on the second SIM card in the terminal. One of the two calls based on the first SIM card is in the in-call state, the other one is in the call holding state, and the call based on the second SIM card is in the call holding state.

In some embodiments, the current call state of the first SIM card already in progress is maintained as the in-call state, and the call of the second SIM card triggered by the first call request is configured as in the in-call state.

At this time, two calls in the in-call state are included in the terminal, which are based on the first SIM card and the second SIM card respectively.

In some embodiments, the call of the first SIM card and/or the second SIM card triggered by the first call request is configured as in the in-call state, and the current call state of the first SIM card already in progress is switched from the in-call state to the call holding state.

In some embodiments, when the first call request is triggered based on the first SIM card, the call of the first SIM card triggered by the first call request is configured as in the in-call state, and the current call state of the first SIM card already in progress is switched from the in-call state to the call holding state. That is to say, there are two calls based on the first SIM card in the terminal, one is in the in-call state and the other is in the call holding state.

Or, when the first call request is triggered based on the second SIM card, the call of the second SIM card triggered by the first call request is configured as in the in-call state, and the current call state of the first SIM card already in progress is switched from the in-call state to the call holding state. That is to say, there is one call based on the first SIM card and one call based on the second SIM card in the terminal, and the call based on the first SIM card is in the in-call state, and the call based on the second SIM card is in the call holding state.

Or, when the first call request is triggered based on the first SIM card and the second SIM card at the same time, the call of the first SIM card and the second SIM card triggered by the first call request is configured as in the in-call state, and the current call state of the first SIM card already in progress is switched from the in-call state to the call holding state. That is, there are two calls based on the first SIM card and one call based on the second SIM card in the terminal. One of the two calls based on the first SIM card is in the in-call state, the other is in the call holding state, and the call based on the second SIM card is in the call holding state.

Optionally, the call state of each call depends on the user's operation. For example, when the SIM card in the terminal already in the in-call state is the same as the SIM card in the first call request, and the user connects the call triggered by the first call request, the call in the terminal that is already in the in-call state will be automatically switched to be in the call holding state.

In some embodiments of the present disclosure, based on the current call state of the first SIM card already in progress, the first SIM card and/or the second SIM card is controlled to enter at least one of the in-call state, the call holding state, and the call waiting state, which can realize that each SIM card supports calls in three different states, and there can be calls in the in-call state in both cards to achieve dual card dual pass.

Furthermore, the call request further includes a second call request. The second call request is used to trigger a call of the first SIM card and/or the second SIM card. At this time, the call of the first SIM card and/or the second SIM card triggered by the second call request is configured as in the call waiting state.

As an example, when the call state of the first SIM card and the second SIM card already in progress is the in-call state, it is determined that the first call request based on the first SIM card and the second SIM card is triggered. When the user needs to answer the call of the first call request, the call of the first call request is answered. At this time, the call of the first SIM card and the second SIM card triggered by the first call request is in the in-call state, and the current call state of the first SIM card and the second SIM card already in progress has been switched from the in-call state to the call holding state. When the second call request based on the first SIM card and the second SIM card is received, the call of the second call request is configured as in the call waiting state. That is, there are six calls in the terminal, three calls in the first SIM card and the second SIM card respectively, and the three calls are in the in-call state, the call holding state and the call waiting state respectively.

Optionally, when the user needs to answer the call triggered by the second call request, in some embodiments, if the call of the first SIM card and/or the second SIM card triggered by the second call request is switched from the call waiting state to the in-call state, and the current call state of the first SIM card and/or the second SIM card already in progress is the in-call state, the current call state of the first SIM card and/or the second SIM card already in progress is switched from the in-call state to the call holding state.

In some embodiments, if the second call request is used to trigger a call of the first SIM card, when the call of the first SIM card triggered by the second call request is switched from the call waiting state to the in-call state, and the current call state of the first SIM card already in progress is the in-call state, the current call state of the first SIM card already in progress is switched from the in-call state to the call holding state.

In some embodiments, if the second call request is used to trigger a call of the first SIM card , when the call of the first SIM card triggered by the second call request is switched from the call waiting state to the in-call state, and the current call state of the second SIM card already in progress is the in-call state, the current call state of the second SIM card already in progress is switched from the in-call state to the call holding state.

In some embodiments, if the second call request is used to trigger a call of the first SIM card, when the call of the first SIM card triggered by the second call request is switched from the call waiting state to the in-call state, and the current call state of the first SIM card and the second SIM card already in progress is the in-call state, the current call state of the second SIM card already in progress is switched from the in-call state to the call holding state.

In some embodiments, if the second call request is used to trigger a call of the second SIM card, when the call of the second SIM card triggered by the second call request is switched from the call waiting state to the in-call state, and the current call state of the second SIM card already in progress is in the in-call state, the current call state of the second SIM card already in progress is switched from the in-call state to the call holding state.

In some embodiments, if the second call request is used to trigger a call of the second SIM card, when the call of the second SIM card triggered by the second call request is switched from the call waiting state to the in-call state, and the current call state of the first SIM card already in progress is the in-call state, the current call state of the first SIM card already in progress is switched from the in-call state to the call holding state.

In some embodiments, if the second call request is used to trigger a call of the second SIM card, when the call of the second SIM card triggered by the second call request is switched from the call waiting state to the in-call state, and the current call state of the first SIM card and the second SIM card already in progress is the in-call state, the current call state of the first SIM card and the second SIM card already in progress is switched from the in-call state to the call holding state.

In some embodiments, if the second call request is used to trigger a call of the first SIM card and the second SIM card, when the call of the first SIM card and the second SIM card triggered by the second call request is switched from the call waiting state to the in-call state, and the current call state of the first SIM card already in progress is the in-call state, the current call state of the first SIM card already in progress is switched from the in-call state to the call holding state.

In some embodiments, if the second call request is used to trigger a call of the first SIM card and the second SIM card, when the call of the first SIM card and the second SIM card triggered by the second call request is switched from the call waiting state to the in-call state, and the current call state of the second SIM card already in progress is the in-call state, the current call state of the second SIM card already in progress is switched from the in-call state to the call holding state.

In some embodiments, if the second call request is used to trigger a call of the first SIM card and the second SIM card, when the call of the first SIM card and the second SIM card triggered by the second call request is switched from the call waiting state to the in-call state, and the current call state of the first SIM card and the second SIM card already in progress is the in-call state, the current call state of the first SIM card and the second SIM card already in progress is switched from the in-call state to the call holding state.

In some embodiments, if the call of the first SIM card and/or the second SIM card triggered by the second call request is switched from the call waiting state to the in-call state, and the current call state of the first SIM card and/or the second SIM card already in progress is the call holding state, the current call state of the first SIM card and/or the second SIM card already in progress is maintained as the call holding state, or the call of the first SIM card and/or the second SIM card in the call holding state is disconnected.

In some embodiments, if the second call request is used to trigger a call of the first SIM card, the call of the first SIM card triggered by the second call request is switched from the call waiting state to the in-call state, and the current call state of the first SIM card already in progress is the call holding state, the current call state of the first SIM card already in progress maintained as the call holding state, or the call of the first SIM card in the call holding state is disconnected.

In some embodiments, if the second call request is used to trigger a call of the first SIM card, the call of the first SIM card triggered by the second call request is switched from the call waiting state to the in-call state, and the current call state of the second SIM card already in progress is the call holding state, the current call state of the second SIM card already in progress is maintained as the call holding state, or the call of the second SIM card in the call holding state is disconnected.

In some embodiments, if the second call request is used to trigger a call of the first SIM card, the call of the first SIM card triggered by the second call request is switched from the call waiting state to the in-call state, and the current call state of the first SIM card and the second SIM card already in progress is the call holding state, the current call state of the first SIM card and the second SIM card already in progress is maintained as the call holding state, or the call of the first SIM card and the second SIM card in the call holding state is disconnected.

In some embodiments, if the second call request is used to trigger a call of the second SIM card, the call of the second SIM card triggered by the second call request is switched from the call waiting state to the in-call state, and the current call state of the first SIM card already in progress is the call holding state, the current call state of the first SIM card already in progress is maintained as the call holding state, or the call of the first SIM card in the call holding state is disconnected.

In some embodiments, if the second call request is used to trigger a call of the second SIM card, the call of the second SIM card triggered by the second call request is switched from the call waiting state to the in-call state, and the current call state of the second SIM card already in progress is the call holding state, the current call state of the second SIM card already in progress is maintained as the call holding state, or the call of the second SIM card in the call holding state is disconnected.

In some embodiments, if the second call request is used to trigger a call of the second SIM card, if the call of the second SIM card triggered by the second call request is switched from the call waiting state to the in-call state, and the current call state of the first SIM card and the second SIM card already in progress is the call holding state, the current call state between the first SIM card and the second SIM card already in progress is maintained as the call holding state, or the call of the first SIM card and the second SIM card in call holding state is disconnected.

In some embodiments, if the second call request is used to trigger a call of the first SIM card and the second SIM card, the call of the first SIM card and the second SIM card triggered by the second call request is switched from the call waiting state to the in-call state, and the current call state of the first SIM card already in progress is the call holding state, the current call state of the first SIM card already in progress is maintained as the call holding state, or the call of the first SIM card in the call hold state is disconnected.

In some embodiments, if the second call request is used to trigger a call of the first SIM card and the second SIM card, the call of the first SIM card and the second SIM card triggered by the second call request is switched from the call waiting state to the in-call state, and the current call state of the second SIM card already in progress is the call holding state, the current call state of the second SIM card already in progress is maintained as the call holding state, or the call of the second SIM card in call holding state is disconnected.

In some embodiments, if the second call request is used to trigger a call of the first SIM card and the second SIM card, the call of the first SIM card and the second SIM card triggered by the second call request is switched from the call waiting state to the in-call state, and the current call state of the first SIM card and the second SIM card already in progress is the call holding state, the current call state of the first SIM card and the second SIM card already in progress is maintained as the call holding state, or the call of the first SIM card and the second SIM card in the call holding state is disconnected.

It is worth noting that more than one implementation in some of the above embodiments and more than one implementation in some other embodiments can be combined arbitrarily according to user requirements and actual situations. In addition, the more than one implementation in some of the above embodiments and the more than one implementation in some other embodiments can also be combined with various call states of the first call request, to which thee embodiments of the present disclosure are not limited to, as long as it can be realized.

In some embodiments of the present disclosure, a variety of different implementation schemes are provided to meet the various user requirements.

FIG. 6 is a flowchart of a method for a call shown according to another embodiment. As shown in FIG. 6, the method for a call is applied in a terminal, and includes the following steps.

In step S31, a merging tab is displayed, in response to determining that the first call request and the second call request are call requests triggered by a same SIM card

Among them, the merging tab is used to merge the first call request and the second call request.

It should be understood that the first call request and the second call request can be actively dialed by the first SIM card or received by the first SIM card, or one of them is actively dialed by the first SIM card and the other is received by the first SIM card, to which the embodiments of the disclosure are not limited here.

In step S32, the first call request and the second call request are merged in response to determining that the merging tab is triggered.

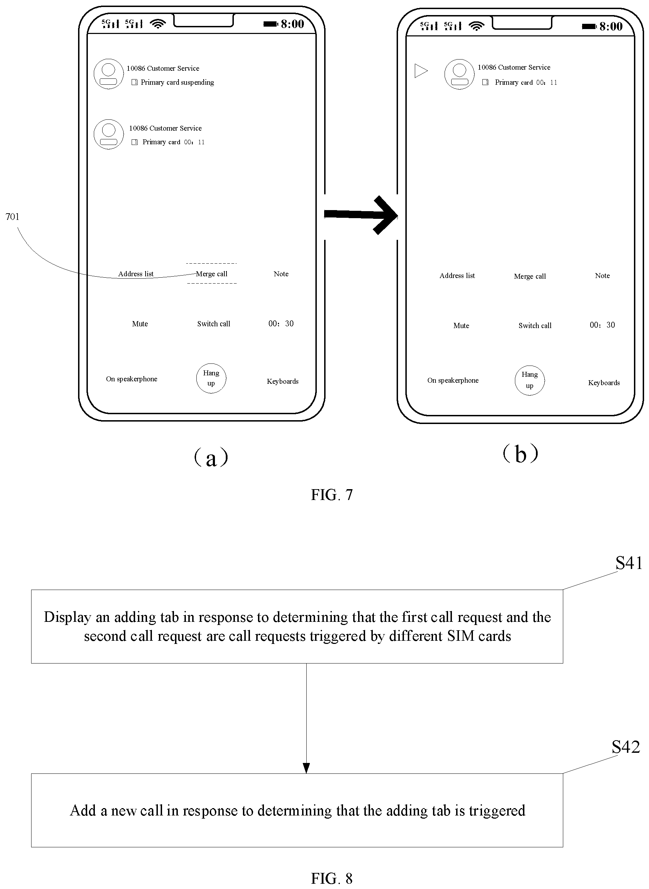

For example, if the first call request and the second call request are call requests actively triggered by the first SIM card (i.e. the primary card), as shown in (a) of FIG. 7, the merging tab 701 is displayed in the call interface. When receiving a user operation of clicking the merging tab 701, and responding to the operation, as shown in (b) of FIG. 7, the first call request and the second call request are folded and merged, and the call in the in-call state is displayed.

Optionally, after merging the calls, an expansion tab can also be displayed in the call interface. When the user wants to view all call requests, the expansion tab may be clicked to view all call requests triggered by the same SIM card.

In some embodiments, when there is more than one call request for each SIM card in the terminal, the more than one call request for the same SIM card all can be merged through the merging tab.

In some embodiment of the present disclosure, since each SIM card can trigger more than one call request, various user requirements can be met by merging or expanding the more than one call request for each SIM card.

FIG. 8 is a flowchart of a method for a call shown according to another embodiment. As shown in FIG. 8, the method for a call is applied in the terminal, and includes the following steps.

In step S41, an adding tab is displayed in response to determining that the first call request and the second call request are call requests triggered by different SIM cards.

Among them, the adding tab is used to add a new call.

It is worth noting that the adding tab in the present disclosure is for the aspect of actively dialing a call request by the user. When receiving a call request from another user, a new call can be displayed on the call interface without using the adding tab.

In step S42, a new call is added in response to determining that the adding tab is triggered.

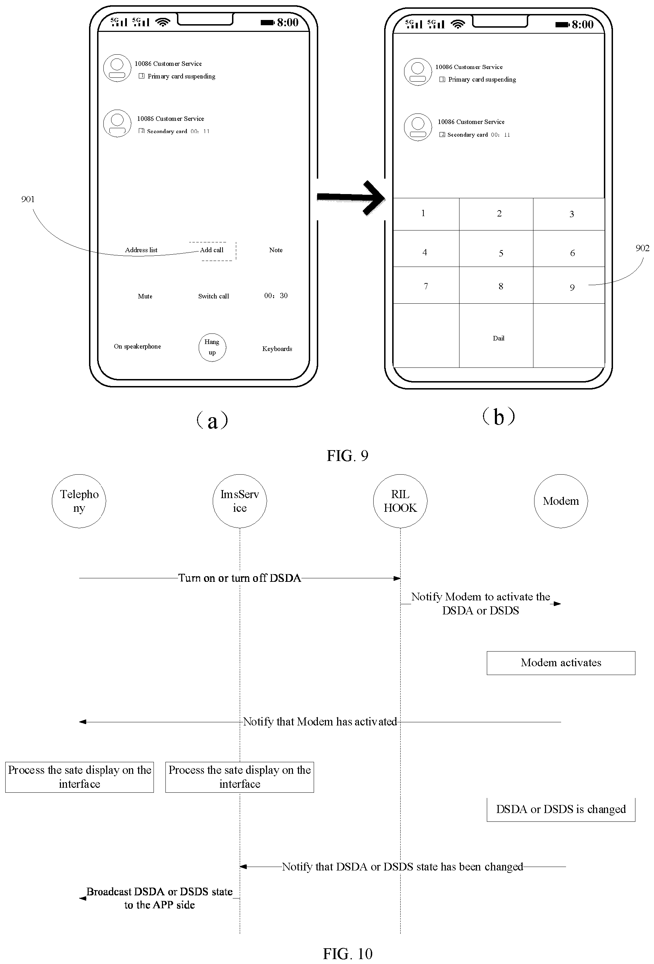

For example, if the first call request is a call request triggered by the first SIM card (i.e. the primary card), and the second call request is a call request triggered by the second SIM card (i.e. the secondary card), as shown in (a) of FIG. 9, an adding tab 901 is displayed on the call interface. When receiving a user operation of clicking the adding tab 901, responding to the operation, as shown in (b) of FIG. 9, a keyboards interface 902 is displayed, in which the user can enter a number to make a new call.

It is worth noting that each SIM card in the terminal can at most support three calls, and the three calls are respectively in the in-call state, the call holding state, and the call waiting states. When there is already a call in the in-call state of the first SIM card in the terminal, a new call based on the first SIM card is to be added through the adding tab according to the user requirements, and the new call is connected to be in the in-call state, the call originally in the in-call state of the first SIM card will be automatically switched to the call holding state. And when the new call ends or is configured as in the call holding state, the call originally in the in-call state is switched to the call holding state.

In some embodiments, if there is a call in the in-call state and a call in the call holding state in the first SIM card, and a new call based on the first SIM card is to be added according to the user requirements, when the new call is connected, the call in the call holding state in the first SIM card is hung up, and the call in the in-call state is switched to the call holding state.

In addition, when a new call is to be added according to the user requirements, it can be made through any one of SIM card.

In the embodiments of the present disclosure, different user requirements can be realized by adding a new tab to the call interface.

In some other embodiments of the present disclosure, the terminal is controlled whether to open the DSDA mode by setting a switch. The switch can be set in the call interface or in any other setting interface.

FIG. 10 shows a system flow chart for controlling the DSDA mode. When the DSDA switch is turned on or off, RIL HOOK will notify Modem to activate the DSDA or DSDS, and the Modem will notify Telephony after the processing is completed. Telephony will follow up the registration state of the DSDS or DSDS and notify the interface to display, such as adding the DSDA state display to the state, or displaying on the interface in the form of notification to let the user know the current DSDA state. At the same time, after the modem activates DSDA or switches to DSDS, it will actively notify Telephony. Telephony will broadcast the message to the application layer for processing, thus enabling or disabling the DSDA mode.

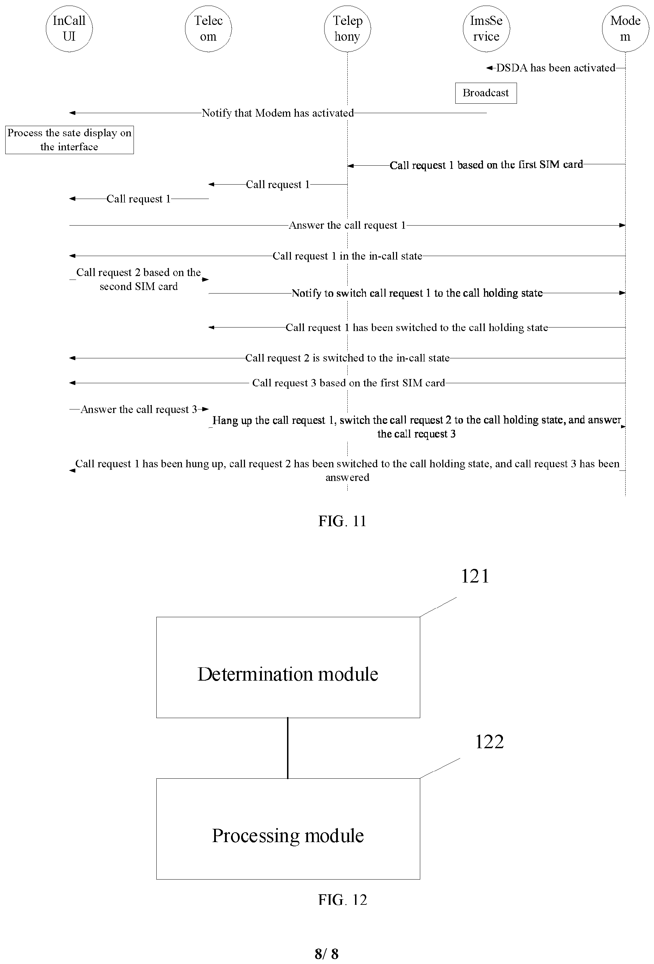

In order to better understand the method for a call proposed in the embodiments of the present disclosure, the processing of each call will continue to be described in detail below, taking that there are an in-call state, a call holding state, and a call waiting state in the terminal as an example. As shown in FIG. 11, the Modem side will detect whether the DSDA mode is turned on in real time, and notify the message to the ImsService side. The ImsService side will broadcast to the InCallUI side that whether the DSDA mode is turned on. When the DSDA mode is turned on, the InCallUI side will configure the relevant content. When the terminal receives the call request 1 based on the first SIM card (the call request 1 can be understood as the call request used to trigger the current call of the first SIM card and/or the second SIM card already in progress in the above embodiments), it will broadcast the call request 1 layer by layer, and display the call request 1 on the InCallUI side. When the user answers the call request 1, the InCallUI side will send a message of answering the call request 1 to the Modem side. The Modem side will respond to answering the call request 1, switch the call request 1 to the in-call state, and send the message that the call request 1 has been switched to the in-call state to the InCallUI side, so that the InCallUI side can change the display of relevant notifications on the call interface. At this time, the user dials the call request 2 based on the second SIM card through the InCallUI side, and the call request 2 is equivalent to the first call request used to trigger a call of the first SIM card and/or the second SIM card in the above embodiments. The InCallUI side sends the call request 2 based on the second SIM card to the Telecom side, and the Telecom side sends a message to the Modem side to switch the call request 1 to the call holding state. After switching the call request 1 to the call holding state, the Modem side switches the call request 2 to the in-call state. At this time, in response to receiving the call request 3 based on the first SIM card (the call request 3 is equivalent to the second call request used to trigger a call of the first SIM card and/or the second SIM card in the above embodiments), the Modem side sends the call request 3 to the InCallUI side. When the user answers the call request 3, the Telecom side sends a message to the Modem side to hang up the call request 1, switch the call request 2 to the call holding state, and answer the call request 3. Responding to the above request, the Modem side hangs up the call request 1, switches the call request 2 to the call holding state, and answers call request 3.

In the embodiments of the present disclosure, the terminal can support more than one call request at the same time, and different call requests can be in different call states according to the user requirements, thus meeting various user requirements.

Based on the same concept, the embodiment of the present disclosure also provides a device for a call.

It can be understood that, in order to realize the above functions, the device for a call provided by the embodiments of the present disclosure includes a hardware structure and/or a software module corresponding to each function. In combination with the modules and algorithm steps of each example disclosed in the embodiments of the disclosure, the embodiments of the disclosure can be implemented in the form of hardware or a combination of hardware and computer software. Whether a function is executed in the way of hardware or computer software driven by hardware depends on the specific application and design constraints of the technical solution. Those skilled in the art can use different methods to realize the described functions for each specific application, but such implementation should not be considered beyond the scope of the technical solution of the embodiments of the present disclosure.

FIG. 12 is a block diagram of a device for a call shown according to an embodiment. Referring to FIG. 12, the device includes a determination module 121 and a processing module 122.

The determination module 121 is configured to determine a call request, which is used to trigger a concurrent call based on the first SIM card and the second SIM card.

The processing module 122 is configured to perform call processing on the first SIM card and the second SIM card based on the call request.

In some embodiments, the processing module is further configured to display a first call information and a second call information on the call interface. The first call information at least includes the attribute information of the first SIM card and a first call state of the call based on the first SIM card, and the second call information at least includes the attribute information of the second SIM card and a second call state of the call based on the second SIM card.

In some embodiments, the processing module 122 is further configured to determine a current call state of the first SIM card and/or the second SIM card already in progress when the call request is triggered, and control the first SIM card and/or the second SIM card to enter at least one of the in-call state, the call holding state and the call waiting state based on the current call state of the first SIM card and/or the second SIM card already in progress.

In some embodiments, the current call state of the first SIM card already in progress is the in-call state, the call request includes a first call request detected when the first SIM card is in the in-call state, and the first call request is used to trigger a call of the first SIM card and/or the second SIM card. The processing module 122, in some embodiments, is also used to maintain the current call state of the first SIM card already in progress as the in-call state, and configure the call of the first SIM card and/or the second SIM card triggered by the first call request as in the call holding state; or maintain the current call state of the first SIM card as in call state already in progress as the in-call state, and configure the call of the second SIM card triggered by the first call request as in the in-call state; or configure the call of the first SIM card and/or the second SIM card triggered by the first call request as in the in-call state, and switch the current call state of the first SIM card already in progress from the in-call state to the call holding state.

In some embodiments, the call request also includes a second call request, which is used to trigger a call of the first SIM card and/or the second SIM card. The processing module 122 is further configured to configure the call of the first SIM card and/or the second SIM card triggered by the second call request as in the call waiting state.

In some embodiments, the processing module 122 is further configured to: switch the current call state of the first SIM card and/or the second SIM card already in progress from the in-call state to the call holding state, in response to determining that the call of the first SIM card and/or the second SIM card triggered by the second call request is switched from the call waiting state to the in-call state and the current call state of the first SIM card and/or the second SIM card already in progress is the in-call state; and maintain the current call state of the first SIM card and/or the second SIM card already in progress as the call holding state, or disconnect a call of the first SIM card and/or the second SIM card in the call holding state, in response to determining that the call of the first SIM card and/or the second SIM card triggered by the second call request is switched from the call waiting state to the in-call state and the current call state of the first SIM card and/or the second SIM card already in progress is the call holding state.

In some embodiments, the processing module 122 is further configured to: display a merging tab in response to determining that the first call request and the second call request are call requests triggered by a same SIM card, where the merging tab is used to merge the first call request and the second call request; and merge the first call request and the second call request in response to determining that the merging tab is triggered.

In some embodiments, the processing module 122 is further configured to: display an adding tab in response to determining that the first call request and the second call request are call requests triggered by different SIM cards, where the adding tab is used to add a new call; and add the new call in response to determining that the adding tab is triggered.

With respect to the device in the above embodiments, the specific mode for each module to perform operations has been described in detail in the embodiments of the method, and will not be described in detail here.

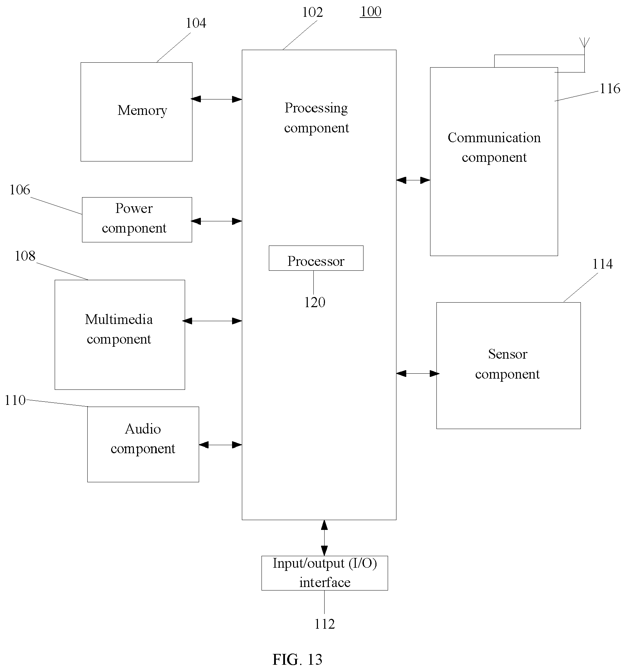

FIG. 13 is a block diagram of a device 100 for a call according to an embodiment. Referring to FIG. 13, the device 100 may include one or more of the following components: processing component 102, memory 104, power component 106, multimedia component 108, audio component 110, input/output (I/O) interface 112, sensor component 114, and communication component 116.

The processing component 102 generally controls the overall operation of the device 100, such as operations associated with display, telephone call, data communication, camera operation, and recording operations. The processing component 102 may include one or more processors 120 to execute instructions to complete all or part of steps the above described method. In addition, the processing component 102 may include one or more modules to facilitate interactions between the processing component 102 and other components. For example, the processing component 102 may include a multimedia module to facilitate interaction between the multimedia component 108 and the processing component 102.

The memory 104 is configured to store various types of data to support operation in the device 100. Examples of such data include instructions, contact data, phone book data, messages, pictures, videos, and the like, for any application or method operating on the device 100. The memory 104 may be implemented by any type of volatile or non-volatile storage device or a combination thereof, such as static random access memory (SRAM), electrically erasable programmable read-only memory (EEPROM), erasable programmable read-only memory (EPROM), programmable read only memory (PROM), read-only memory (ROM), magnetic memory, flash memory, disk or optical disk.

The power component 106 provides power for various components of the device 100. The power component 106 may include a power management system, one or more power supplies, and other components associated with generating, managing, and distributing power for the device 100.

The multimedia component 108 includes a screen providing an output interface between the device 100 and the user. In some embodiments, the screen may include a liquid crystal display (LCD) and a touch panel (TP). If the screen includes a touch panel, the screen may be implemented as a touch screen to receive an input signal from the user. The touch panel includes one or more touch sensors to sense touch, sliding, and gestures on the touch panel. The touch sensor may not only sense the boundary of a touch or slide operation, but also detect the duration and pressure associated with the touch or slide operation. In some embodiments, the multimedia component 108 includes a front camera and/or a rear camera. When the device 100 is in an operation mode, such as a shooting mode or a video mode, the front camera and/or the rear camera can receive external multimedia data. Each front camera and rear camera can be a fixed optical lens system or have focal length and optical zoom capability.

The audio component 110 is configured to output and/or input audio signals. For example, the audio component 110 includes a microphone (MIC), which is configured to receive external audio signals when the device 100 is in an operation mode, such as a call mode, a recording mode, and a voice recognition mode. The received audio signals may be further stored in the memory 104 or transmitted via the communication component 116. In some embodiments, the audio component 110 also includes a speaker for outputting audio signals.

The I/O interface 112 provides an interface between the processing component 102 and a peripheral interface module, which can be a keyboard, click wheel, button, etc. These buttons may include, but are not limited to, Home button, Volume button, Start button, and Lock button.

The sensor component 114 includes one or more sensors for providing various aspects of state evaluation for the device 100. For example, the sensor component 114 can detect the opening/closing state of the device 100, the relative positioning of the components, for example, the components are the display and keypad of the device 100. The sensor component 114 can also detect the location change of the device 100 or one component of the device 100, the presence or absence of the user's contact with the device 100, the orientation or acceleration/deceleration of the device 100, and the temperature change of the device 100. The sensor component 114 may include a proximity sensor configured to detect the presence of nearby objects without any physical contact. The sensor component 114 may also include a light sensor, such as a CMOS or CCD image sensor, for use in imaging applications. In some embodiments, the sensor component 114 may also include an acceleration sensor, a gyroscope sensor, a magnetic sensor, a pressure sensor, or a temperature sensor.

The communication component 116 is configured to facilitate wired or wireless communication between the device 100 and other devices. The device 100 may access a wireless network based on a communication standard, such as WiFi, 2G or 3G, or a combination thereof. In some embodiment, the communication component 116 receives a broadcast signal or broadcast related information from an external broadcast management system via a broadcast channel. In some embodiments, the communication component 116 also includes a near field communication (NFC) module to facilitate short range communication. For example, the NFC module can be implemented based on radio frequency identification (RFID) technology, infrared data association (IrDA) technology, ultra-wideband (UWB) technology, Bluetooth (BT) technology and other technologies.

In some embodiments, the device 100 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic components for performing the above methods.

In some embodiments, a non-transitory computer-readable storage medium including instructions is also provided, such as a memory 104 including instructions, which can be executed by the processor 120 of the device 100 to complete the above method. For example, the non-transitory computer-readable storage medium can be ROM, random access memory (RAM), CD-ROM, tape, floppy disk, optical data storage device, etc.

It can be understood that" more than one" in the present disclosure refers to two or more, and other quantifiers are similar to them. "And/or" describes the association relationship of association objects, indicating that there can be three kinds of relationships. For example, A and/or B, can indicate that there are three cases: A alone, A and B together, and B alone. The character "/" generally indicates that the context association objects are in an "or" relationship. The singular forms of "a", "said" and "the" are also intended to include the majority form, unless the context clearly indicates otherwise.

It can be further understood that the terms "first", "second" and the like are used to describe various kinds of information, but such information should not be limited to these terms. These terms are used to distinguish the same type of information from each other, and do not indicate a specific order or importance. In fact, expressions such as "first" and "second" can be used interchangeably. For example, without departing from the scope of this disclosure, the first information can also be called the second information, and similarly, the second information can also be called the first information.

It can be further understood that the orientational or positional relationship indicated by the terms "center", "longitudinal", "transverse", "front", "back", "top", "bottom", "left", "right", "vertical", "horizontal", "top", "bottom", "inside", "outside", etc. is based on the orientation or positional relationship shown in the drawings, and is for the convenience of describing this embodiment and simplifying the description, rather than indicating or implying that the device or element referred to have a specific orientation, be constructed and operated in a specific orientation.

It can be further understood that, unless otherwise specified, "connection" includes both direct connection without other components and indirect connection with other components.

Reference throughout this specification to "one embodiment," "an embodiment," "an example," "some embodiments," "some examples," or similar language means that a particular feature, structure, or characteristic described is included in at least one embodiment or example. Features, structures, elements, or characteristics described in connection with one or some embodiments are also applicable to other embodiments, unless expressly specified otherwise.

The terms "module," "sub-module," "circuit," "sub-circuit," "circuitry," "sub-circuitry," "unit," or "sub-unit" may include memory (shared, dedicated, or group) that stores code or instructions that can be executed by one or more processors. A module may include one or more circuits with or without stored code or instructions. The module or circuit may include one or more components that are directly or indirectly connected. These components may or may not be physically attached to, or located adjacent to, one another.

A unit or module may be implemented purely by software, purely by hardware, or by a combination of hardware and software. In a pure software implementation, for example, the unit or module may include functionally related code blocks or software components, that are directly or indirectly linked together, so as to perform a particular function.

It can be further understood that in the embodiments of the present disclosure, although operations are described for illustration purposes in a specific order in the drawings, they should not be understood as requiring that these operations be performed in the specific order or serial order shown, or requiring that all the operations shown be performed to obtain the desired results. In a particular environment, multitasking and parallel processing may be advantageous.

It should be understood that the present disclosure is not limited to the precise structure described above and shown in the drawings. Instead, the scope of the present disclosure is limited only by the attached claims.

## Claims

1. A method for a call, comprising:
determining (S11, S21), by a terminal, a call request, wherein the terminal is at least installed with a first SIM card and a second SIM card, and the call request is configured to trigger a concurrent call based on the first SIM card and the second SIM card; and
performing (S12), by the terminal, a call processing for the first SIM card and the second SIM card based on the call request.

2. The method according to claim 1, wherein the method further comprises:
displaying a first call information and a second call information on a call interface;
wherein the first call information comprises attribute information of the first SIM card and a first call state of a call based on the first SIM card; the second call information comprises attribute information of the second SIM card and a second call state of a call based on the second SIM card.

3. The method according to claim 1 or 2, wherein performing the call processing for the first SIM card and the second SIM card based on the call request comprises:
determining (S22), in response to determining that the call request is triggered, a current call state of the first SIM card and/or the second SIM card already in progress; and
controlling (S23) the first SIM card and/or the second SIM card to enter at least one of an in-call state, a call holding state or a call waiting state based on the current call state of the first SIM card and/or the second SIM card already in progress.

4. The method according to claim 3, wherein the current call state of the first SIM card already in progress is the in-call state, the call request comprises a first call request detected when the first SIM card is in the in-call state, and the first call request is configured to trigger a call of the first SIM card and/or the second SIM card; and
wherein controlling the first SIM card and/or the second SIM card to enter at least one of the in-call state, the call holding state or the call waiting state, based on the current call state of the first SIM card and/or the second SIM card already in progress comprises:
maintaining the current call state of the first SIM card already in progress as the in-call state, and configuring the call of the first SIM card and/or the second SIM card triggered by the first call request as in the call holding state; or
maintaining the current call state of the first SIM card already in progress as the in-call state, and configuring the call of the second SIM card triggered by the first call request as in the in-call state; or
configuring the call of the first SIM card and/or the second SIM card triggered by the first call request as in the in-call state, and switching the current call state of the first SIM card already in progress from the in-call state to the call holding state.

5. The method according to claim 3 or 4, wherein the call request further comprises a second call request, the second call request is configured to trigger a call of the first SIM card and/or the second SIM card, and the method further comprises:
configuring the call of the first SIM card and/or the second SIM card triggered by the second call request as in the call waiting state.

6. The method according to claim 5, wherein the method further comprises:
switching the current call state of the first SIM card and/or the second SIM card already in progress from the in-call state to the call holding state, in response to determining that the call of the first SIM card and/or the second SIM card triggered by the second call request is switched from the call waiting state to the in-call state and the current call state of the first SIM card and/or the second SIM card already in progress is the in-call state; and
maintaining the current call state of the first SIM card and/or the second SIM card already in progress as the call holding state, or disconnecting a call of the first SIM card and/or the second SIM card in the call holding state, in response to determining that the call of the first SIM card and/or the second SIM card triggered by the second call request is switched from the call waiting state to the in-call state and the current call state of the first SIM card and/or the second SIM card already in progress is the call holding state.

7. The method according to claim 5 or 6, wherein the method further comprises:
displaying (S31) a merging tab in response to determining that the first call request and the second call request are call requests triggered by a same SIM card, wherein the merging tab is configured to merge the first call request and the second call request; and
merging (S32) the first call request and the second call request in response to determining that the merging tab is triggered;
optionally, the method further comprises:
displaying(S41) an adding tab in response to determining that the first call request and the second call request are call requests triggered by different SIM cards, wherein the adding tab is configured to add a new call; and
adding (S42) the new call in response to determining that the adding tab is triggered.

8. A device for a call, comprising:
a processor; and
a memory, wherein the memory is used to store an instruction executable by the processor;
wherein, the processor is configured to execute the instruction based on a method for a call, comprising:
determining (S11, S21), by a terminal, a call request, wherein the terminal is installed with a first SIM card and a second SIM card, and the call request is configured to trigger a concurrent call based on the first SIM card and the second SIM card; and
performing (S12), by the terminal, a call processing for the first SIM card and the second SIM card based on the call request.

9. The device according to claim 8, wherein the method further comprises:
displaying a first call information and a second call information on a call interface;
wherein the first call information comprises attribute information of the first SIM card and a first call state of a call based on the first SIM card; the second call information comprises attribute information of the second SIM card and a second call state of a call based on the second SIM card.

10. The device according to claim 8 or 9, wherein performing the call processing for the first SIM card and the second SIM card based on the call request comprises:
determining (S22), in response to determining that the call request is triggered, a current call state of the first SIM card and/or the second SIM card already in progress; and
controlling (S23) the first SIM card and/or the second SIM card to enter at least one of an in-call state, a call holding state or a call waiting state based on the current call state of the first SIM card and/or the second SIM card already in progress.

11. The device according to claim 10, wherein the current call state of the first SIM card already in progress is the in-call state, the call request comprises a first call request detected when the first SIM card is in the in-call state, and the first call request is configured to trigger a call of the first SIM card and/or the second SIM card; and
wherein controlling the first SIM card and/or the second SIM card to enter at least one of the in-call state, the call holding state or the call waiting state, based on the current call state of the first SIM card and/or the second SIM card already in progress comprises:
maintaining the current call state of the first SIM card already in progress as the in-call state, and configuring the call of the first SIM card and/or the second SIM card triggered by the first call request as in the call holding state; or
maintaining the current call state of the first SIM card already in progress as the in-call state, and configuring the call of the second SIM card triggered by the first call request as in the in-call state; or
configuring the call of the first SIM card and/or the second SIM card triggered by the first call request as in the in-call state, and switching the current call state of the first SIM card already in progress from the in-call state to the call holding state.

12. The device according to claim 10 or 11, wherein the call request further comprises a second call request, the second call request is configured to trigger a call of the first SIM card and/or the second SIM card, and the method further comprises:
configuring the call of the first SIM card and/or the second SIM card triggered by the second call request as in the call waiting state.

13. The device according to claim 12, wherein the method further comprises:
switching the current call state of the first SIM card and/or the second SIM card already in progress from the in-call state to the call holding state, in response to determining that the call of the first SIM card and/or the second SIM card triggered by the second call request is switched from the call waiting state to the in-call state and the current call state of the first SIM card and/or the second SIM card already in progress is the in-call state; and
maintaining the current call state of the first SIM card and/or the second SIM card already in progress as the call holding state, or disconnecting a call of the first SIM card and/or the second SIM card in the call holding state, in response to determining that the call of the first SIM card and/or the second SIM card triggered by the second call request is switched from the call waiting state to the in-call state and the current call state of the first SIM card and/or the second SIM card already in progress is the call holding state.

14. The device according to claim 12 or 13, wherein the method further comprises:
displaying (S31) a merging tab in response to determining that the first call request and the second call request are call requests triggered by a same SIM card, wherein the merging tab is configured to merge the first call request and the second call request; and
merging (S32) the first call request and the second call request in response to determining that the merging tab is triggered;
optionally, the method further comprises:
displaying(S41) an adding tab in response to determining that the first call request and the second call request are call requests triggered by different SIM cards, wherein the adding tab is configured to add a new call; and
adding (S42) the new call in response to determining that the adding tab is triggered.

15. A storage medium, wherein when an instruction in the storage medium is executed by a processor of a terminal, the terminal is enabled to execute the method for a call of any one of claims 1-7.
